# EUROPEAN PATENT APPLICATION

(11) **EP 4 650 612 A1**
(43) Date of publication of application: **19.11.2025**
(21) Application number: 24806134.3
(22) Date of filing: 26.02.2024
(51) Int. Cl.: F16C 11/10

(54) **ROTATING SHAFT MECHANISM, FOLDING APPARATUS AND TERMINAL DEVICE**

(30) Priority: 18.05.2023 CN 202321205791 U
(71) Applicant: Honor Device Co., Ltd., Shenzhen, Guangdong 518040 (CN)
(72) Inventor: ZHANG, Yaolei, Shenzhen, Guangdong 518040 (CN); YAN, Bin, Shenzhen, Guangdong 518040 (CN); LI, Houcun, Shenzhen, Guangdong 518040 (CN)
(74) Representative: Gill Jennings & Every LLP
(86) International application number: PCT/CN2024/078569
(87) International publication number: WO 2024/234773

(57) **Abstract**

Embodiments of this application relate to the field of electronic device technologies, and provide a rotating shaft mechanism, a foldable apparatus, and a terminal device. The rotating shaft mechanism includes a base, at least two first swing arms, and at least two rotating members. The first swing arms are respectively disposed on two sides of the base, and the first swing arms are rotatably connected to the base. The rotating members are respectively disposed on the two sides of the base, the rotating member includes a connection portion, and the connection portion is connected to the first swing arm located on a same side of the base. The first swing arms located on the two sides of the base can relatively rotate based on the base, so that the rotating shaft mechanism is switched between an unfolded state and a folded state. When the rotating shaft mechanism is in the unfolded state, an orthographic projection of the connection portion on a set plane at least partially overlaps an orthographic projection of the base on the set plane. The rotating shaft mechanism provided in the embodiments of this application can reduce a width size of the rotating shaft mechanism, thereby facilitating improving structural compactness. The rotating shaft mechanism is applicable to a terminal device requiring a relatively small width size of the rotating shaft mechanism.

## Description

This application claims priority to Chinese Patent Application No. 202321205791.2, filed with the China National Intellectual Property Administration on May 18, 2023 and entitled "ROTATING SHAFT MECHANISM, FOLDABLE APPARATUS, AND TERMINAL DEVICE", which is incorporated herein by reference in its entirety.

### TECHNICAL FIELD

This application relates to the field of electronic device technologies, and in particular, to a rotating shaft mechanism, a foldable apparatus, and a terminal device.

### BACKGROUND

A foldable electronic device is an electronic device that can be folded and unfolded, such as a foldable screen mobile phone, a foldable screen tablet computer, or a foldable screen notebook computer. A foldable electronic device generally includes a body and a flexible display screen disposed on the body. The body can be folded or unfolded by using a rotating shaft mechanism of the body. The flexible display screen can be folded or unfolded together with the body by bending a flexibly deformable portion of the flexible display screen.

In some cases, the foldable electronic device requires the rotating shaft mechanism to have a relatively small width size. However, due to a structural limitation of the rotating shaft mechanism, it is difficult to further reduce the width size of the rotating shaft mechanism, thereby affecting a design of the foldable electronic device.

### SUMMARY

Embodiments of this application provide a rotating shaft mechanism, a foldable apparatus, and a terminal device, to alleviate a technical problem in the related technology that it is difficult to reduce a width size of the rotating shaft mechanism.

To achieve the foregoing objective, the following technical solutions are used in embodiments of this application:
According to a first aspect, an embodiment of this application provides a rotating shaft mechanism, including:
a base;
at least two first swing arms, respectively disposed on two sides of the base, and the first swing arms being rotatably connected to the base; and
at least two rotating members, respectively disposed on the two sides of the base, the rotating member including a connection portion, and the connection portion being connected to the first swing arm located on a same side of the base, where
the first swing arms located on the two sides of the base are capable of relatively rotating based on the base, so that the rotating shaft mechanism is switched between an unfolded state and a folded state; and when the rotating shaft mechanism is in the unfolded state, an orthographic projection of the connection portion on a set plane at least partially overlaps an orthographic projection of the base on the set plane, and the set plane is perpendicular to a thickness direction of the base.

The foregoing technical solution in embodiments of this application at least has the following technical effects or advantages.

When the rotating shaft mechanism provided in this embodiment of this application is in the unfolded state, the orthographic projection, on the set plane, of the connection portion that is configured to be connected to the first swing arm and that is of the rotating member at least partially overlaps the orthographic projection of the base on the set plane. Compared with a case in which the connection portion and the base are sequentially disposed along a width direction of the base and do not overlap, when other structures and sizes are the same, a width size of the rotating shaft mechanism may be reduced, thereby facilitating improving structural compactness. The rotating shaft mechanism is applicable to a terminal device requiring a relatively small width size of the rotating shaft mechanism.

In some embodiments of the first aspect, the connection portion is slidably connected to the first swing arm; and when the rotating shaft mechanism is switched from the unfolded state to the folded state, the connection portion and the first swing arm slide relatively.

In some embodiments of the first aspect, the connection portion has a straight sliding groove, and the first swing arm is slidably disposed in the straight sliding groove; and
when the rotating shaft mechanism is in the unfolded state, an orthographic projection of the straight sliding groove on the set plane at least partially overlaps the orthographic projection of the base on the set plane.

In some embodiments of the first aspect, when the rotating shaft mechanism is in the unfolded state, the straight sliding groove is located above the base.

In some embodiments of the first aspect, when the rotating shaft mechanism is in the unfolded state, both an orthographic projection of a first groove wall and an orthographic projection of a second groove wall of the straight sliding groove on the set plane at least partially overlap the orthographic projection of the base on the set plane; and the first groove wall and the second groove wall are relatively disposed along the thickness direction of the base.

In some embodiments of the first aspect, when the rotating shaft mechanism is in the unfolded state, a sliding extension direction of the straight sliding groove is inclined to the thickness direction of the base.

In some embodiments of the first aspect, the first swing arm includes:
a rotating portion, rotatably connected to the base; and
a sliding portion, a first end of the sliding portion being connected to the rotating portion, and the sliding portion being slidably disposed in the straight sliding groove, where
when the rotating shaft mechanism is in the unfolded state, the first end is located above the rotating portion.

In some embodiments of the first aspect, the connection portion is rotatably and slidably connected to the first swing arm; and when the rotating shaft mechanism is switched from the unfolded state to the folded state, the connection portion and the first swing arm relatively rotate and slide.

In some embodiments of the first aspect, the connection portion has a track groove, the first swing arm has a sliding body, and the sliding body is higher pair fit with the track groove; and
when the rotating shaft mechanism is in the unfolded state, an orthographic projection of the track groove on the set plane at least partially overlap the orthographic projection of the base on the set plane.

In some embodiments of the first aspect, when the rotating shaft mechanism is in the unfolded state, the track groove is located above the base.

In some embodiments of the first aspect, the base includes:
a shaft cover; and
a substrate, disposed on an inner side of the shaft cover, where
the first swing arm is rotatably connected to the substrate; and when the rotating shaft mechanism is in the unfolded state, the orthographic projection of the connection portion on the set plane at least partially overlaps an orthographic projection of the shaft cover on the set plane, and the substrate, the first swing arm, and the connection portion are located on a same side of the shaft cover in the thickness direction of the base.

In some embodiments of the first aspect, a notch is formed between a side portion of the substrate and a side edge of the shaft cover; and when the rotating shaft mechanism is in the unfolded state, at least part of the connection portion is located in the notch.

In some embodiments of the first aspect, the rotating member is a door plate, the door plate has an adhering surface, and the adhering surface is used for adhering to a foldable screen.

In some embodiments of the first aspect, the rotating shaft mechanism further includes:
at least two second swing arms, respectively disposed on the two sides of the base, and the second swing arms being rotatably connected to the base; and
at least two connection members, respectively disposed on the two sides of the base, and the connection member being rotatably connected to the base by using the second swing arm located on a same side of the base, where
the rotating member is rotatably connected to the connection member located on a same side of the base.

According to a second aspect, an embodiment of this application provides a foldable apparatus. The foldable apparatus includes:
a first housing;
a second housing; and
the rotating shaft mechanism according to any embodiment of the first aspect, the first swing arm or the rotating member on one side of the base being connected to the first housing, and the first swing arm or the rotating member on the other side of the base being connected to the second housing.

According to a third aspect, an embodiment of this application provide a terminal device. The terminal device includes:
the foldable apparatus according to the second aspect; and
a foldable screen, disposed on the first housing and the second housing, where a position of a foldable portion of the foldable screen corresponds to a position of the rotating shaft mechanism.

It may be understood that for beneficial effects of the second aspect and the third aspect, reference may be made to the related descriptions in the first aspect. Details are not described herein.

### BRIEF DESCRIPTION OF DRAWINGS

FIG. 1 is a schematic diagram of a structure of an electronic device in an unfolded state in some cases;
FIG. 2 is a schematic diagram of a structure of an electronic device in a folded state in some cases;
FIG. 3 is a schematic diagram of a structure of a foldable mechanism in an unfolded state in some cases;
FIG. 4 is a schematic diagram of a structure of a foldable mechanism in a folded state in some cases;
FIG. 5 is a schematic diagram of a structure of a terminal device in an unfolded state according to some embodiments of this application;
FIG. 6 is a schematic diagram of a structure of the terminal device shown in FIG. 5 in a folded state;
FIG. 7 is a schematic cross-sectional view of a rotating shaft mechanism in an unfolded state according to some embodiments of this application;
FIG. 8 is a locally enlarged schematic diagram of A in FIG. 7;
FIG. 9 is a schematic cross-sectional view of the rotating shaft mechanism shown in FIG. 7 in a folded state;
FIG. 10 is a schematic diagram of a structure of a foldable mechanism in an unfolded state in some other cases; and
FIG. 11 is a schematic cross-sectional view of a rotating shaft mechanism in an unfolded state according to some other embodiments of this application.

Reference numerals in the accompanying drawings:
1. electronic device; 01. body; 02. flexible display screen; 021: flexibly deformable portion; 011. foldable mechanism; 0111. support seat; 0112. swing arm; 0113. support plate; 012. first side plate; 013. second side plate;
100. rotating shaft mechanism; 10. base; 20. first swing arm; 21. rotating portion; 22. sliding portion; 221. first end; 30. rotating member; 31. connection portion; 311. straight sliding groove; 3111. first groove wall; 3112. second groove wall; 312. track groove; 211. sliding body; 11. shaft cover; 12. substrate; 101. notch; 301. adhering face; 40. second swing arm; 50. connection member;
1000. foldable apparatus; 200. first housing; 300. second housing;
10000. terminal device; 2000. foldable screen; and 2100. foldable portion.

### DESCRIPTION OF EMBODIMENTS

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain this application and cannot be construed as a limitation to this application.

Unless otherwise defined, meanings of all technical and scientific terms used in this specification are the same as those usually understood by a person skilled in the art to which this application belongs. Terms used in the specification are merely intended to describe objectives of the specific embodiments, but are not intended to limit this application. In addition, the terms "include", "have", and any variant thereof in the specification, claims, and accompanying drawings of this application are intended to cover a non-exclusive inclusion.

In the description of this application, it should be understood that orientation or position relationships indicated by the terms, such as "length", "width", "thickness", "top", "bottom", "inner", "outer", "up", and "down" are based on orientation or position relationships shown in the accompanying drawings, and are used only for ease and brevity of illustration and description, rather than indicating or implying that the mentioned apparatus or component needs to have a particular orientation or needs be constructed and operated in a particular orientation. Therefore, such terms should not be construed as limiting of this application.

The terms, such as "first" and "second" are used for distinctive descriptions only and should not be construed as indicating or implying relative importance or implicitly indicating a quantity of technical features indicated. For example, a first swing arm and a second swing arm are merely used to distinguish between different swing arms, and are not intended to limit a sequence thereof. The first swing arm may alternatively be referred to as a second swing arm, and the second swing arm may alternatively be referred to as a first swing arm without departing from the scope of various described embodiments. In addition, terms such as "first" and "second" do not limit that the indicated features are necessarily different.

In this application, unless otherwise explicitly specified or defined, the terms such as "connect" and "connection" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in this application according to specific situations.

In this application, "and/or" describes only an association relationship for describing associated objects and represents that three relationships may exist. For example, A and/or B may indicate the following three cases: A alone, both A and B, and B alone. In addition, the character "/" in this specification generally indicates an "or" relationship between the associated objects.

It should be noted that, in this application, the terms, such as "in some embodiments", "exemplarily", or "for example", are used to represent giving an example, an illustration, or a description. In this application, any embodiment or design scheme described by using "in some embodiments", "exemplarily", or "for example" should not be explained as being more preferred or having more advantages than another embodiment or design scheme. Exactly, use of the terms, such as "in some embodiments", "examplarily", and "for example", is intended to present a relative concept in a specific manner.

To make the objectives, technical solutions, and advantages of this application clearer, the following further describes this application in detail with reference to the accompanying drawings and the embodiments.

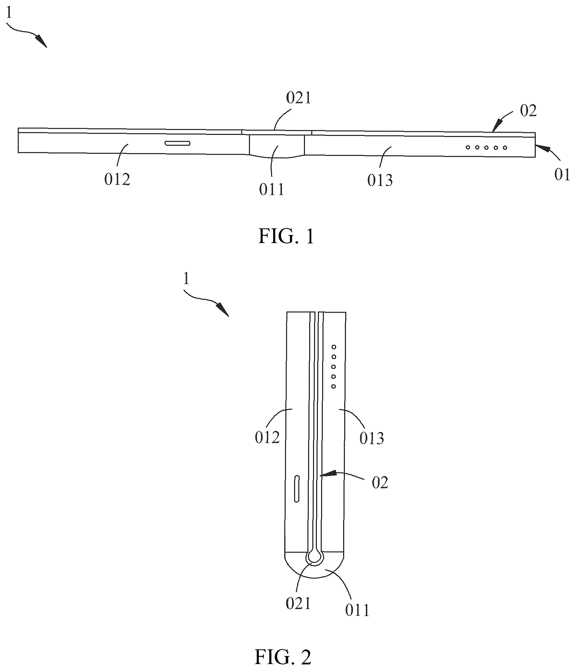

As shown in FIG. 1 and FIG. 2, FIG. 1 is a front view of a foldable electronic device 1 in an unfolded state in some cases, and FIG. 2 is a front view of the electronic device 1 shown in FIG. 1 in a folded state.

The electronic device 1 includes a body 01 and a flexible display screen 02 disposed on the body 01. The body 01 includes a foldable mechanism 011, a first side plate 012, and a second side plate 013. The first side plate 012 and the second side plate 013 are respectively connected to two sides of the foldable mechanism 011 and can rotate between the unfolded state and the folded state based on the foldable mechanism 011. The flexible display screen 02 is disposed on the first side plate 012 and the second side plate 013, and a position of a flexibly deformable portion 021 of the flexible display screen 02 corresponds to a position of the foldable mechanism 011. The flexibly deformable portion 021 can be bent, so that the flexible display screen 02 can be folded or unfolded as the first side plate 012 and the second side plate 013 rotate.

As shown in FIG. 1, when the electronic device 1 is in the unfolded state, an angle between the first side plate 012 and the second side plate 013 is approximately 180°, the flexible display screen 02 is approximately flat, and the flexibly deformable portion 021 of the flexible display screen 02 is approximately flat.

As shown in FIG. 2, when the electronic device 1 is in the folded state, an angle between the first side plate 012 and the second side plate 013 is approximately 0°, the flexibly deformable portion 021 of the flexible display screen 02 is bent, and the flexible display screen 02 is located between the first side plate 012 and the second side plate 013.

In some cases, when space that is for disposing the foldable mechanism 011 and that is between the first side plate 012 and the second side plate 013 of the electronic device 1 is relatively small, the foldable mechanism 011 is required to have a relatively small width size (that is, a size in a direction from the first side plate 012 to the second side plate 013 when the electronic device 1 is in the unfolded state). However, due to a structural limitation of the foldable mechanism 011, it is difficult to further reduce the width size of the foldable mechanism, thereby affecting a design of the electronic device 1.

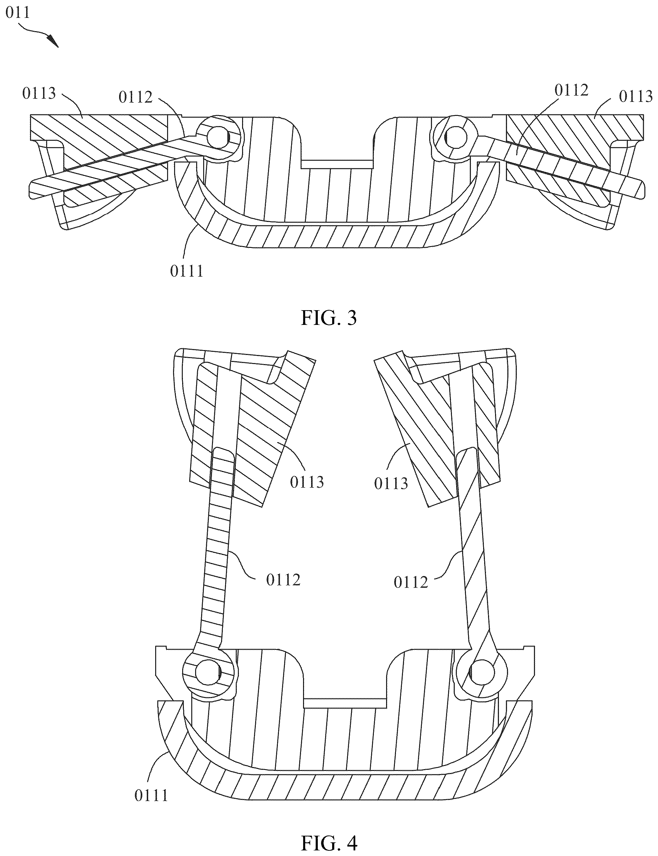

For example, as shown in FIG. 3 and FIG. 4, FIG. 3 shows a case in which the foldable mechanism 011 is in an unfolded state, and FIG. 4 shows a case in which the foldable mechanism 011 is in a folded state.

The foldable mechanism 011 includes a support seat 0111, two swing arms 0112 respectively disposed on two sides of the support seat 0111, and two support plates 0113 respectively disposed on the two sides of the support seat 0111. One end of the swing arm 0112 is rotatably connected to the support seat 0111 by using a rotating shaft, and the other end of the swing arm 0112 is slidably fit with a linear sliding groove of the support plate 0113. When the electronic device 1 is switched between the folded state and the unfolded state, the first side plate 012 and the second side plate 013 may respectively drive the two support plates 0113 to rotate relative to the support seat 0111, and may respectively drive the two swing arms 0112 to rotate relative to the support seat 0111. The two support plates 0113 may be configured to support the flexibly deformable portion 021 of the flexible display screen 02.

When the electronic device 1 is in the unfolded state, a connection between the support plate 0113 and the swing arm 0112 is located on a side of the support seat 0111 in a width direction of the support seat 0111. When a size of the support plate 0113 and a size of the support seat 0111 are not changed, it is difficult to reduce a width size of a whole formed by the support plate 0113 and the support seat 0111. Consequently, it is difficult to reduce the width size of the foldable mechanism 011. The width direction of the support seat 0111 is the same as a width direction of the foldable mechanism 011, and means a direction in which the swing arm 0112 on one side of the support seat 0111 points to the swing arm 0112 on the other side.

In view of this, an embodiment of this application provides a rotating shaft mechanism, a foldable apparatus including the rotating shaft mechanism, and a terminal device including the foldable apparatus, to alleviate a technical problem in the related technology that it is difficult to reduce a width size of a foldable mechanism of an electronic device.

The terminal device provided in this embodiment of this application is a foldable electronic device, that is, an electronic device that can be folded and unfolded. The terminal device may be a mobile phone, a tablet computer, a laptop computer (laptop), a notebook computer (notebook PC), a personal digital assistant (personal digital assistant, PDA), a wearable device (for example, a watch), an in-vehicle device, an augmented reality (augmented reality, AR) device, a virtual reality (virtual reality, VR) device, or the like. However, this application is not limited thereto.

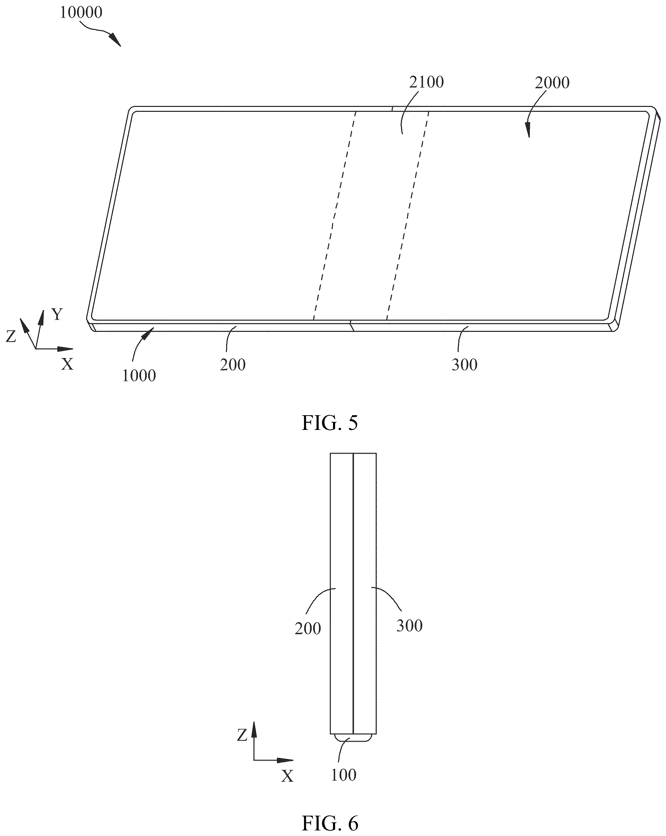

As shown in FIG. 5 and FIG. 6, FIG. 5 is a schematic diagram of a three-dimensional structure of a terminal device 10000 in an unfolded state according to some embodiments of this application, and FIG. 6 is a front view of the terminal device 10000 shown in FIG. 5 in a folded state. For ease of understanding, in embodiments of this application, descriptions are provided by using an example in which the terminal device 10000 is a mobile phone.

Under different use requirements, the terminal device 10000 may be unfolded to an unfolded state, or may be folded to a folded state, or may be in an intermediate state between an unfolded state and a folded state. It should be understood that the intermediate state may be any state of the terminal device 10000 between the unfolded state and the folded state, rather than a unique state.

The terminal device 10000 includes a foldable apparatus 1000 and a foldable screen 2000. The foldable screen 2000 is disposed on the foldable apparatus 1000. The foldable apparatus 1000 can provide support and protection for the foldable screen 2000, and can be folded or unfolded. The foldable screen 2000 is a flexible screen, and therefore, can be folded or unfolded together with the foldable apparatus 1000. It may be understood that the foldable screen 2000 can be configured to display information and provide an interactive interface for a user, and may be a plurality of types of display screens.

The foldable apparatus 1000 includes a rotating shaft mechanism 100, a first housing 200, and a second housing 300. The rotating shaft mechanism 100 is located between the first housing 200 and the second housing 300, and is respectively connected to the first housing 200 and the second housing 300. The first housing 200 and the second housing 300 may relatively rotate based on the rotating shaft mechanism 100, so that the first housing 200 and the second housing 300 can relatively rotate close to each other (in other words, rotate toward each other), to enable the terminal device 10000 to be in the folded state, and can relatively rotate away from each other (in other words, rotate away from each other), to enable the terminal device 10000 to be in the unfolded state.

It may be understood that there may be one or more rotating shaft mechanisms 100. When there are a plurality of rotating shaft mechanisms 100, the rotating shaft mechanisms 100 may be sequentially spaced apart and all located between the first housing 200 and the second housing 300.

Still as shown in FIG. 5 and FIG. 6, the foldable screen 2000 is disposed on the first housing 200 and the second housing 300, and can be folded or unfolded as the first housing 200 and the second housing 300 rotate. The foldable screen 2000 has a foldable portion 2100, and a position of the foldable portion 2100 corresponds to a position of the rotating shaft mechanism 100. That is, the foldable portion 2100 and the rotating shaft mechanism 100 are disposed opposite to each other. The foldable portion 2100 is flexible, so that when the first housing 200 and the second housing 300 relatively rotate, the foldable screen 2000 can be folded by bending the foldable portion 2100. When the foldable screen 2000 is in the folded state, the foldable portion 2100 may be of a drop shape or a U shape. However, this application is not limited to this shape.

It may be understood that a portion that is of the foldable screen 2000 and that is corresponding to the first housing 200 may be flexible or rigid. A portion that is of the foldable screen 2000 and that is corresponding to the second housing 300 may be flexible or rigid.

A front surface of the foldable screen 2000 is a surface facing away from the rotating shaft mechanism 100, that is, a display surface that is of the foldable screen 2000 and that is configured to display an image. A back surface of the foldable screen 2000 is a surface facing the rotating shaft mechanism 100, and may alternatively be considered as a non-display surface of the foldable screen 2000.

As shown in FIG. 5, when the terminal device 10000 is in the unfolded state, both the foldable apparatus 1000 and the foldable screen 2000 are also in the unfolded state, and a first surface that is of the first housing 200 and that is for installing the foldable screen 2000 and a second surface that is of the second housing 300 and that is for installing the foldable screen 2000 are approximately in a same plane, that is, an angle between the first surface and the second surface is approximately 180°. In this case, the foldable screen 2000 is approximately flat, so that the terminal device 10000 has a relatively large display area. It should be understood that, when the foldable apparatus 1000 is in the unfolded state, the angle between the first surface and the second surface is not limited to an absolute 180°, and the angle between the first surface and the second surface may alternatively be greater than or less than 180°, but close to 180°. For example, the angle may range from 165° to 190° (such as 170°, 173°, 175°, 182°, or 185°, but this application is not limited thereto), and the foldable screen 2000 can also be unfolded.

As shown in FIG. 6, when the terminal device 10000 is in the folded state, both the foldable apparatus 1000 and the foldable screen 2000 are also in the folded state. The first surface that is of the first housing 200 and that is for installing the foldable screen 2000 and the second surface that is of the second housing 300 and that is for installing the foldable screen 2000 are disposed opposite to and approximately parallel to each other, that is, an angle between the first surface and the second surface is approximately 0°. In this case, the foldable screen 2000 is folded relative to the foldable portion 2100 to be in the folded state, to facilitate storage of the terminal device 10000. It should be understood that when the foldable apparatus 1000 is in the unfolded state, the first surface and the second surface are not limited to being absolutely parallel, and the angle between the first surface and the second surface may alternatively be greater than 0°, but close to 0°. For example, the angle may range from 0° to 15° (such as 1°, 2°, 3°, 5°, or 10°, but this application is not limited thereto), and the foldable screen 2000 can also be folded.

In some embodiments, as shown in FIG. 5 and FIG. 6, the terminal device 10000 may be an inward-folding terminal device, and the foldable screen 2000 is an inward-folding foldable screen. After the foldable screen 2000 is folded, the foldable screen 2000 is located between the first housing 200 and the second housing 300.

Certainly, in some other embodiments, the terminal device 10000 may alternatively be an outward-folding terminal device, and the foldable screen 2000 is an outward-folding foldable screen. After the foldable screen 2000 is folded, a display surface of the foldable screen 2000 is exposed, and the first housing 200 and the second housing 300 are located in the foldable screen 2000.

In some embodiments, installation space may be provided on at least one of the first housing 200 and the second housing 300 for installing electronic components of the terminal device 10000. For example, the electronic components may include a circuit board, a battery, a receiver, a speaker, a camera, and the like. However, this application is not limited thereto. The circuit board may integrate electronic components, such as a main controller, a storage unit, an antenna module, and a power management module, of the terminal device 10000. The battery may supply power to electronic components such as the foldable screen 2000, the circuit board, the receiver, the speaker, and the camera. The first housing 200 and the second housing 300 may have the same or different shapes and structures. This is not limited in this embodiment of this application. The first housing 200 and the second housing 300 may be a middle frame structure. Specific shapes and structures may be set as required, and are not uniquely limited in this embodiment of this application.

The rotating shaft mechanism 100 provided in this embodiment of this application is described below.

To facilitate description of the following embodiments, an XYZ three-axis rectangular coordinate system is established. A width direction of the rotating shaft mechanism 100 is defined as an X-axis direction. The X-axis direction is parallel to a direction in which the first housing 200 points to the second housing 300 when the terminal device 10000 is in the unfolded state. A length direction of the rotating shaft mechanism 100 is defined as a Y-axis direction. The Y-axis direction is parallel to a direction in which one end of the first housing 200 points to the other end opposite to the one end when the terminal device 10000 is in the unfolded state. A thickness direction of the rotating shaft mechanism 100 is defined as a Z-axis direction. The Z-axis direction is parallel to a direction in which the first housing 200 points to the foldable screen 2000 when the terminal device 10000 is in the unfolded state, that is, parallel to a thickness direction of the terminal device 10000. The X-axis direction, the Y-axis direction, and the Z-axis direction are perpendicular to each other. The X-axis direction includes a positive X-axis direction and a negative X-axis direction, and so do the Y-axis direction and the Z-axis direction. It should be understood that the coordinate system of the rotating shaft mechanism 100 may be flexibly set according to an actual requirement. This application provides only one example, which cannot be considered as a special limitation to this application.

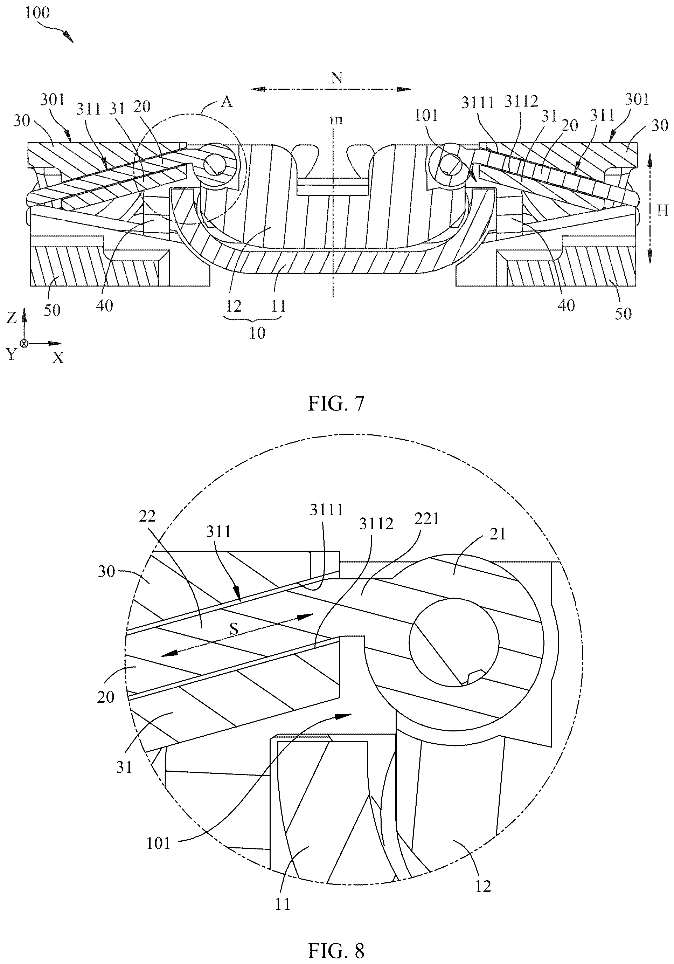

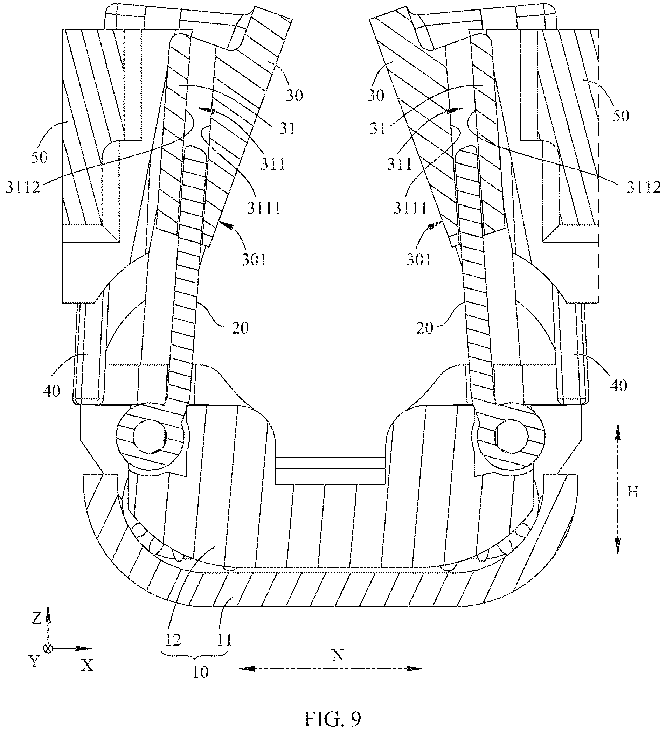

As shown in FIG. 7 to FIG. 9, FIG. 7 is a schematic cross-sectional view of a rotating shaft mechanism in an unfolded state according to some embodiments of this application, FIG. 8 is a locally enlarged schematic diagram of A in FIG. 7, and FIG. 9 is a schematic cross-sectional view of the rotating shaft mechanism 100 shown in FIG. 7 in a folded state.

The rotating shaft mechanism 100 includes a base 10, at least two first swing arms 20, and at least two rotating members 30. The first swing arms 20 are respectively disposed on two sides of the base 10, and the first swing arms 20 are rotatably connected to the base 10. The rotating members 30 are respectively disposed on the two sides of the base 10, the rotating member 30 includes a connection portion 31, and the connection portion 31 is connected to the first swing arm 20 located on a same side of the base 10. The first swing arms 20 located on the two sides of the base 10 can relatively rotate based on the base 10, so that the rotating shaft mechanism 100 is switched between the unfolded state and the folded state. When the rotating shaft mechanism 100 is in the unfolded state, an orthographic projection of the connection portion 31 on a set plane at least partially overlaps an orthographic projection of the base 10 on the set plane, and the set plane is perpendicular to a thickness direction H of the base 10.

It may be understood that the base 10 may support and connect to the first swing arm 20, and may have various structures in regular or irregular shapes, for example, may be a block structure, a frame structure, a housing structure, or a plate structure. However, this application is not limited thereto. The base 10 may be a single component, or may include a plurality of assembled components. In some cases, the base 10 is also referred to as a main shaft, a main body, or the like.

It may be understood that the first swing arms 20 being respectively disposed on the two sides of the base 10 means that the first swing arms 20 are disposed on the two sides of the base 10, but a quantity of first swing arms 20 on each side may be one or more. Quantities of first swing arms 20 on the two sides of the base 10 may be the same or different. It should be understood that the two sides of the base 10 are two sides obtained by using a central longitudinal section m of the base 10 as an interface. The central longitudinal section m is a plane that is parallel to a length direction (that is, a Y-axis direction) and a thickness direction H (that is, a Z-axis direction) of the base 10 and that bisects the base 10 along a width direction N (that is, an X-axis direction) of the base 10. The length direction, the thickness direction H, and the width direction N of the base 10 are perpendicular to each other. By analogy, two sides of a component that are described below are two sides obtained by using a central longitudinal section of the component as an interface. Optionally, the first swing arms 20 on the two sides of the base 10 may be disposed opposite to each other, that is, are approximately at a same position in the length direction of the base 10. This case is exemplarily shown in FIG. 7 and FIG. 9. Certainly, in some other embodiments, the first swing arms 20 on the two sides of the base 10 may not be disposed opposite to each other, that is, are staggered along the length direction of the base 10.

The first swing arm 20 may be connected to the base 10 in various rotatable connection manners, so that the first swing arm 20 can rotate relative to the base 10 when being connected to the base 10. Rotation axes of the first swing arms 20 rotating relative to the base 10 may be set to be approximately parallel. Certainly, a specific deviation is allowed, but the rotation axes are approximately parallel. In other words, manufacturing and assembly errors and the like are allowed. Rotation axes of the first swing arms 20 rotating relative to the base 10 may be approximately parallel to the length direction of the base 10.

The first swing arm 20 may have swing arm structures of various shapes, and may be set based on an actual requirement. This is not limited in embodiments of this application. A main function of the first swing arms 20 on the two sides of the base 10 is to rotate relative to the base 10. For convenience of description, the swing arms are all referred to as first swing arms. However, shapes and structures of the first swing arms 20 on the two sides of the base 10 may be the same or different.

It may be understood that the rotating members 30 being respectively disposed on the two sides of the base 10 means that the rotating members 30 are disposed on the two sides of the base 10, but a quantity of rotating members 30 on each side may be one or more. Quantities of rotating members 30 on the two sides of the base 10 may be the same or different. The rotating members 30 may be various structural members in regular or irregular shapes, such as a plate-like structure, a sheet-like structure, a block-like structure, or a frame structure. However, this application is not limited thereto.

The first swing arm 20 or the rotating member 30 on one side of the base 10 is configured to be connected to the first housing 200 (which may be directly connected, or may be indirectly connected by using an intermediate component, for example, may be indirectly connected by using a connection member 50 below). The first swing arm 20 or the rotating member 30 on the other side of the base 10 is configured to be connected to the second housing 300 (which may be directly connected, or may be indirectly connected by using an intermediate component). When the first housing 200 and the second housing 300 relatively rotate, the first swing arm 20 and the rotating member 30 located on the two sides of the base 10 are driven to rotate.

When the rotating shaft mechanism 100 is applied to the terminal device 10000, as the terminal device 10000 is switched between the unfolded state and the folded state, the rotating shaft mechanism 100 is also synchronously switched between the unfolded state and the folded state.

As shown in FIG. 7 and FIG. 9 in sequence, when the rotating shaft mechanism 100 is switched from the unfolded state to the folded state, the first swing arms 20 located on the two sides of the base 10 relatively rotate close to each other, and the rotating members 30 located on the two sides of the base 10 also relatively rotate close to each other.

As shown in FIG. 9 and FIG. 7 in sequence, when the rotating shaft mechanism 100 is switched from the folded state to the unfolded state, the first swing arms 20 located on the two sides of the base 10 relatively rotate away from each other, and the rotating members 30 located on the two sides of the base 10 also relatively rotate away from each other.

The connection portion 31 is a part that is of the rotating member 30 and that is configured to be connected to the first swing arm 20, is a part of the rotating member 30, and may have various forms of structures, for example, may have a plate-like structure, a sheet-like structure, a block-like structure, a protrusion structure, a groove structure, or a sliding column structure. However, this application is not limited thereto. In the first swing arm 20 and the rotating member 30 that are located on a same side of the base 10, the connection portion 31 of the rotating member 30 is connected to the first swing arm 20, so that the rotating member 30 and the first swing arm 20 can simultaneously rotate relative to the base 10.

When the rotating shaft mechanism 100 is in the unfolded state, the orthographic projection of the connection portion 31 on the set plane at least partially overlaps the orthographic projection of the base 10 on the set plane (the at least partially overlapping may be partially overlapping or totally overlapping). Therefore, when the rotating shaft mechanism 100 is in the unfolded state, at least part of the connection portion 31 and at least part of the base 10 are sequentially disposed along the thickness direction H of the base 10, so that the at least part of the connection portion 31 and the at least part of the base 10 are approximately located at a same position in the width direction N of the base 10 and share same space. For example, at least part of the connection portion 31 may be located above the base 10 (that is, a side of the base 10 close to the foldable screen 2000). This case is shown in FIG. 7. Certainly, in some other implementations, at least part of the connection portion 31 may alternatively be located below the base 10 (that is, a side of the base 10 far away from the foldable screen 2000).

It should be understood that, the set plane may be any plane perpendicular to the thickness direction H of the base 10, rather than a unique plane, and is defined for ease of describing that an orthographic projection of the connection portion 31 along the thickness direction H of the base 10 at least partially overlaps an orthographic projection of the base 10 along the thickness direction H. For example, when the terminal device 10000 is in the unfolded state, the set plane may be parallel to the foldable screen 2000.

As may be known according to the foregoing descriptions, when the rotating shaft mechanism 100 provided in this embodiment of this application is in the unfolded state, the orthographic projection, on the set plane, of the connection portion 31 that is configured to be connected to the first swing arm 20 and that is of the rotating member 30 at least partially overlaps the orthographic projection of the base 10 on the set plane, and the set plane is perpendicular to the thickness direction of the base 10, thereby enabling the connection portion 31 and the base 10 to share the same space in the width direction N of the base 10. Compared with a case in which the connection portion 31 and the base 10 are sequentially disposed along the width direction of the base 10 and do not share the space, when other structures and sizes are the same, a width size (that is, a size of the rotating shaft mechanism 100 in the width direction) of the rotating shaft mechanism 100 may be reduced, thereby facilitating improving structural compactness. The rotating shaft mechanism 100 is applicable to the terminal device 10000 requiring a relatively small width size of the rotating shaft mechanism 100.

There are multiple connection and fitting manners between the connection portion 31 and the first swing arm 20. The following descriptions are provided as examples.

In some embodiments, as shown in FIG. 7 to FIG. 9, the connection portion 31 is slidably connected to the first swing arm 20; and when the rotating shaft mechanism 100 is switched from the unfolded state to the folded state, the connection portion 31 and the first swing arm 20 relatively slide.

When the rotating shaft mechanism 100 is switched from the unfolded state to the folded state, the first swing arms 20 located on the two sides of the base 10 relatively rotate close to each other, and the rotating members 30 located on the two sides of the base 10 also relatively rotate close to each other. At the same time, the rotating member 30 slides relative to the first swing arm 20 by using the connection portion 31. That is, the rotating member 30 roughly moves away from the base 10 and away from the first swing arm 20, and it may be considered that a length of an assembly formed by the rotating member 30 and the first swing arm 20 is extended.

When the rotating shaft mechanism 100 is switched from the folded state to the unfolded state, the first swing arms 20 located on the two sides of the base 10 relatively rotate away from each other, and the rotating members 30 located on the two sides of the base 10 also relatively rotate away from each other. At the same time, the rotating member 30 slides relative to the first swing arm 20 by using the connection portion 31. That is, the rotating member 30 roughly moves toward the base 10 and close to the first swing arm 20, and it may be considered that a length of an assembly formed by the rotating member 30 and the first swing arm 20 is shortened.

It may be understood that the connection portion 31 and the first swing arm 20 may be connected in various sliding fit manners, for example, may be fit through a straight sliding groove, or may be fit through a circular-arc-shaped sliding groove. However, this application is not limited thereto.

Based on such settings, when the rotating shaft mechanism 100 is switched from the unfolded state to the folded state, an overlapping amount between the rotating member 30 and the first swing arm 20 may be reduced. In the related technology, to reduce a possibility that the rotating member 30 detaches from the first swing arm 20, an overlapping amount (which may also be referred to as a contact amount, and is used to represent a contact area between the rotating member 30 and the first swing arm 20) needs to be provided between the rotating member 30 and the first swing arm 20. Therefore, the rotating member 30 and the first swing arm 20 need to have a length in the width direction N of the rotating shaft mechanism 100. However, when the width size of the rotating shaft mechanism 100 is given or required to be relatively small, it is difficult to increase a length of the first swing arm 20 and a length of a portion that is of the rotating member 30 and that is configured to be slidably connected to the first swing arm 20, thereby affecting the stability when the rotating shaft mechanism 100 is switched between the unfolded state and the folded state. However, in this embodiment of this application, when the rotating shaft mechanism 100 is in the unfolded state, the orthographic projection, on the set plane, of the connection portion 31 that is of the rotating member 30 and that is configured to be connected to the first swing arm 20 at least partially overlaps the orthographic projection of the base 10 on the set plane, so that the connection portion 31 is enabled to be extended and lengthened toward the base 10 when the width size of the rotating shaft mechanism 100 is not changed, thereby facilitating increasing the overlapping amount between the rotating member 30 and the first swing arm 20 when the rotating shaft mechanism 100 is in the folded state, and improving the stability when the rotating shaft mechanism 100 is switched between the unfolded state and the folded state. In addition, the working principles and sizes of other components of the rotating shaft mechanism 100 may not need to be changed.

Optionally, in some embodiments, as shown in FIG. 7 to FIG. 9, the connection portion 31 has a straight sliding groove 311, and the first swing arm 20 is slidably disposed in the straight sliding groove 311. When the rotating shaft mechanism 100 is in the unfolded state, an orthographic projection of the straight sliding groove 311 on the set plane at least partially overlaps the orthographic projection of the base 10 on the set plane.

It may be understood that the straight sliding groove 311 is a sliding groove having a linear sliding path, so that the first swing arm 20 can slide approximately along a linear track in the straight sliding groove 311. When the rotating shaft mechanism 100 is in the unfolded state, the orthographic projection of the straight sliding groove 311 on the set plane at least partially overlaps the orthographic projection of the base 10 on the set plane. Therefore, at least part of a groove wall of the straight sliding groove 311 and at least part of the base 10 are sequentially disposed along the thickness direction H of the base 10, so that the at least part of the groove wall of the straight sliding groove 311 and the at least part of the base 10 are approximately located at a same position in the width direction N of the base 10 and share same space.

When the rotating shaft mechanism 100 is switched from the unfolded state to the folded state, the first swing arms 20 located on the two sides of the base 10 relatively rotate close to each other, and the rotating members 30 located on the two sides of the base 10 also relatively rotate close to each other. At the same time, the first swing arm 20 slides in the straight sliding groove 311 relative to the connection portion 31. That is, the rotating member 30 roughly moves away from the base 10 and away from the first swing arm 20, and an overlapping amount between the groove wall of the straight sliding groove 311 and the first swing arm 20 gradually decreases.

When the rotating shaft mechanism 100 is switched from the folded state to the unfolded state, the first swing arms 20 located on the two sides of the base 10 relatively rotate away from each other, and the rotating members 30 located on the two sides of the base 10 also relatively rotate away from each other. At the same time, the first swing arm 20 slides in the straight sliding groove 311 relative to the connection portion 31. That is, the rotating member 30 roughly moves toward the base 10 and close to the first swing arm 20, and an overlapping amount between the groove wall of the straight sliding groove 311 and the first swing arm 20 gradually increases.

Such settings are beneficial for the straight sliding groove 311 to be extended and lengthened toward the base 10, thereby facilitating improving the overlapping amount between the groove wall of the straight sliding groove 311 and the first swing arm 20 when the rotating shaft mechanism 100 is in the folded state, and further improving the stability when the rotating shaft mechanism 100 is switched between the unfolded state and the folded state.

For example, as shown in FIG. 7 and FIG. 8, when the rotating shaft mechanism 100 is in the unfolded state, the straight sliding groove 311 is located above the base 10, that is, at least part of the straight sliding groove 311 is located above the base 10, so that the straight sliding groove 311 is fit with the first swing arm 20. This is especially applicable to an inward-folding terminal device.

Optionally, as shown in FIG. 7 and FIG. 8, when the rotating shaft mechanism 100 is in the unfolded state, both an orthographic projection of the first groove wall 3111 and an orthographic proj ection of the second groove wall 3112 of the straight sliding groove 311 on the set plane at least partially overlap with the orthographic projection of the base 10 on the set plane. The first groove wall 3111 and the second groove wall 3112 are disposed opposite to each other along the thickness direction H of the base 10.

It may be understood that the straight sliding groove 311 has a plurality of connected groove walls, and the first groove wall 3111 and the second groove wall 3112 are two groove walls of the straight sliding groove 311 that are oppositely disposed. When the rotating shaft mechanism 100 is in the unfolded state, the orthographic projection of the first groove wall 3111 and the orthographic projection of the second groove wall 3112 of the straight sliding groove 311 on the set plane at least partially overlap the orthographic projection of the base 10 on the set plane. Therefore, at least part of the first groove wall 3111 and at least part of the base 10 are sequentially disposed along the thickness direction H of the base 10, and at least part of the second groove wall 3112 and the at least part of the base 10 are sequentially disposed along the thickness direction H of the base 10, so that the at least parts of the first groove wall 3111 and the second groove wall 3112 and the at least part of the base 10 are approximately located at a same position in the width direction N of the base 10 and share same space.

Based on such settings, when the rotating shaft mechanism 100 is switched between the unfolded state and the folded state, both the first groove wall 3111 and the second groove wall 3112 may be configured to be in slidable contact with the first swing arm 20. When the rotating shaft mechanism 100 is in the unfolded state, both the orthographic projections of the first groove wall 3111 and the second groove wall 3112 on the set plane at least partially overlap the orthographic projection of the base 10 on the set plane, thereby facilitating extending and lengthening both the first groove wall 3111 and the second groove wall 3112 toward the base 10, and facilitating improving an overlapping amount between the first groove wall 3111 and the first swing arm 20 and an overlapping amount between the second groove wall 3112 and the first swing arm 20 when the rotating shaft mechanism 100 is in the folded state. In addition, the connection portion 31 and the first swing arm 20 can be restricted from swinging in the thickness direction H of the base 10, thereby further improving the stability when the rotating shaft mechanism 100 is switched between the unfolded state and the folded state.

Certainly, in some other embodiments, when the rotating shaft mechanism 100 is in the unfolded state, the orthographic projection of the first groove wall 3111 of the straight sliding groove 311 on the set plane at least partially overlaps the orthographic projection of the base 10 on the set plane, and the orthographic projection of the second groove wall 3112 of the straight sliding groove 311 on the set plane does not overlap the orthographic projection of the base 10 on the set plane. Alternatively, the orthographic projection of the second groove wall 3112 on the set plane at least partially overlaps the orthographic projection of the base 10 on the set plane, and the orthographic projection of the first groove wall 3111 on the set plane does not overlap the orthographic projection of the base 10 on the set plane.

Optionally, as shown in FIG. 7 and FIG. 8, when the rotating shaft mechanism 100 is in the unfolded state, a sliding extension direction S of the straight sliding groove 311 is inclined to the thickness direction H of the base 10.

It may be understood that the sliding extension direction S of the straight sliding groove 311 is a direction in which the straight sliding groove 311 guides a component sliding in the straight sliding groove to slide, that is, a linear sliding direction in which the first swing arm 20 slides in the straight sliding groove 311. That the sliding extension direction S of the straight sliding groove 311 is inclined to the thickness direction H of the base 10 means that the sliding extension direction S of the straight sliding groove 311 is neither parallel nor perpendicular to the thickness direction H of the base 10, that is, the sliding extension direction S of the straight sliding groove 311 and the thickness direction H of the base 10 are disposed in an inclined manner, and an angle formed between the two may be an acute angle or an obtuse angle.

Compared with a case in which when the rotating shaft mechanism 100 is in the unfolded state, the sliding extension direction S of the straight sliding groove 311 is perpendicular to the thickness direction H of the base 10, such settings are beneficial to lengthen a length of the straight sliding groove 311 when the width size of the rotating shaft mechanism 100 is not changed, to increase an overlapping amount between the rotating member 30 and the first swing arm 20 when the rotating shaft mechanism 100 is in the folded state, or reduce the width size of the rotating shaft mechanism 100 when the length of the straight sliding groove 311 is not changed.

It should be noted that, the connection portion 31 and the first swing arm 20 are not limited to a sliding fit through the straight sliding groove. In some other embodiments, the connection portion 31 may have an arc-shaped sliding groove, the first swing arm 20 may have an arc-shaped arm, and the arc-shaped arm is in sliding fit in the arc-shaped sliding groove.

Optionally, as shown in FIG. 7 and FIG. 8, the first swing arm 20 includes a rotating portion 21 and a sliding portion 22. The rotating portion 21 is rotatably connected to the base 10. A first end 221 of the sliding portion 22 is connected to the rotating portion 21, and the sliding portion 22 is slidably disposed in the straight sliding groove 311. When the rotating shaft mechanism 100 is in the unfolded state, the first end 221 is located above the rotating portion 21.

It may be understood that the rotating portion 21 is a portion that is of the first swing arm 20 and that is configured to be rotatably connected to the base 10, and may be an axis-like structure (FIG. 8 exemplarily shows this case), a column-like structure, a cylindrical structure, or the like. However, this application is not limited thereto. The rotating portion 21 may be rotatably connected to the base 10 in a plurality of manners, for example, may be rotatably connected by using a rotating shaft.

The rotating portion 22 is a portion that is of the first swing arm 20 and that is configured to be rotatably connected to the straight sliding groove 311, and may be a plate-like structure (FIG. 8 exemplarily shows this case), a sheet-like structure, a rod-like structure, or the like. However, this application is not limited thereto. The first end 221 is an end that is of the sliding portion 22 and that is configured to be in direct contact with the rotating portion 21.

It should be understood that, being above the rotating portion 21 means a side that is of the rotating portion 21 and that faces the foldable screen 2000, that is, a side that faces away from a bottom portion of the base 10. That the first end 221 is located above the rotating portion 21 means that at least part of the first end 221 is located above the rotating portion 21, rather than that all of the first end 221 is located above the rotating portion 21. The first end 221 may be located inclinedly above or right above the rotating portion 21. FIG. 7 and FIG. 8 exemplarily show a case in which the first end 221 is located inclinedly above the rotating portion 21.

When the rotating shaft mechanism 100 is in the unfolded state, the first end 221 is located above the rotating portion 21. Compared with a solution in which the first end 221 is located below the rotating portion 21 (for example, as shown in FIG. 3), such settings are beneficial to adjust a position of the sliding portion 22 and a position of the straight sliding groove 311 to be above the base 10 when a position of the rotating portion 21 in the thickness direction H of the base 10 is not changed.

In the foregoing embodiment, a case in which the connection portion 31 has a sliding groove (the straight sliding groove 311 or the arc-shaped sliding groove), and the first swing arm 20 is in sliding fit with the sliding groove of the connection portion 31 is described. However, a manner of a sliding connection between the connection portion 31 and the first swing arm 20 is not limited thereto. In some other embodiments, the first swing arm 20 may have a sliding groove, and the connection portion 31 is in sliding fit with the sliding groove of the first swing arm 20.

Optionally, one end of the first swing arm 20 may be rotatably connected to the base 10 by using a rotating shaft, to facilitate stable rotation of the first swing arm 20 relative to the base 10. The other end of the first swing arm 20 is in sliding fit with the straight sliding groove 311. It may be understood that the rotating shaft may be a rotating shaft formed and disposed independently of the first swing arm 20 and the base 10, or may be an integral structure formed and disposed integrally with the first swing arm 20 or the base 10.

Certainly, in some other embodiments, the first swing arm 20 and the base 10 may alternatively be rotatably connected by means of a sliding fit. For example, the first swing arm 20 has a circular-arc-shaped sliding arm and the base 10 has a circular-arc-shaped sliding groove, or the first swing arm 20 has a circular-arc-shaped sliding groove and the base 10 has a circular-arc-shaped sliding arm, and the circular-arc-shaped sliding arm is in sliding fit with the circular-arc-shaped sliding groove, so that the first swing arm 20 and the base 10 are rotatably connected. It may be considered that the first swing arm 20 is rotatably connected to the base 10 by using a visual shaft.

In the foregoing embodiment, a case in which the connection portion 31 is slidably connected to the first swing arm 20 is described, but a manner of a connection and fitting between the connection portion 31 and the first swing arm 20 is not limited thereto.

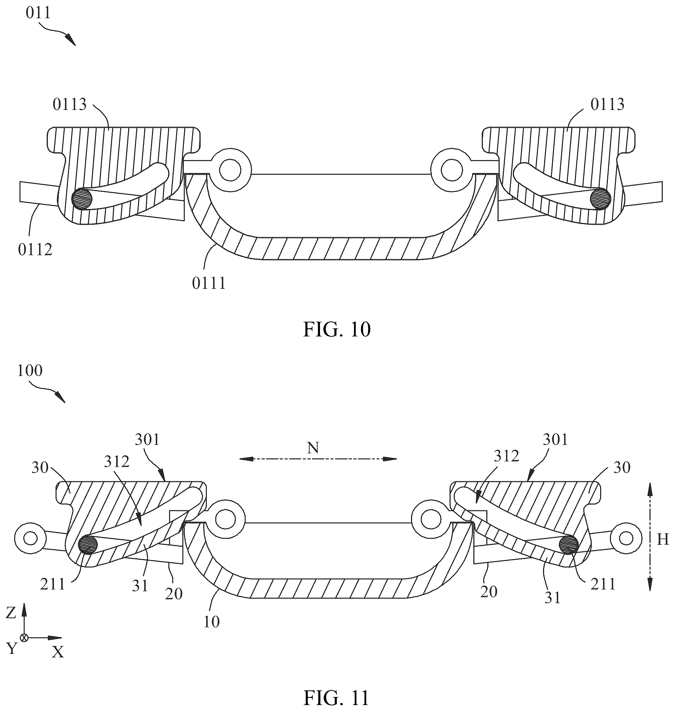

As shown in FIG. 10 and FIG. 11, FIG. 10 shows a case in which a foldable mechanism 011 is in an unfolded state in another situation, and FIG. 11 is a schematic cross-sectional view of a rotating shaft mechanism 100 in an unfolded state according to some other embodiments of this application.

In some other embodiments, the connection portion 31 is rotatably and slidably connected to the first swing arm 20. When the rotating shaft mechanism 100 is switched from the unfolded state to the folded state, the connection portion 31 and the first swing arm 20 relatively rotate and slide.

When the rotating shaft mechanism 100 is switched from the unfolded state to the folded state, the first swing arms 20 located on the two sides of the base 10 relatively rotate close to each other, and the rotating members 30 located on the two sides of the base 10 also relatively rotate close to each other. At the same time, the rotating member 30 slides relative to the first swing arms 20 by using the connection portion 31, and relatively rotate at the same time, thereby facilitating the rotating member 30 to rotate relative to the first swing arm 20 to a required angle (for example, the rotating members 30 on the two sides of the base 10 form drop-shaped space for accommodating the foldable portion 2100 of the foldable screen 2000).

When the rotating shaft mechanism 100 is switched from the folded state to the unfolded state, the first swing arms 20 located on the two sides of the base 10 relatively rotate away from each other, and the rotating members 30 located on the two sides of the base 10 also relatively rotate away from each other. At the same time, the rotating member 30 slides relative to the first swing arms 20 by using the connection portion 31, and relatively rotate at the same time, thereby facilitating the rotating member 30 rotating relative to the first swing arm 20 to a horizontal position (for example, the rotating members 30 on the two sides of the base 10 are roughly parallel to support the foldable portion 2100 of the foldable screen 2000).

It may be understood that the connection portion 31 and the first swing arm 20 may be connected in various rotation and sliding-fit manners. For example, the connection portion 31 and the first swing arm 20 may be higher pair fit, or may be rotatably and slidably fit with a sliding surface by using a sliding portion. However, this application is not limited thereto.

Based on such settings, when the rotating shaft mechanism 100 is switched from the unfolded state to the folded state, a path or travel on which relative rotation and sliding occur between the rotating member 30 and the first swing arm 20 needs to be of a particular length. When the rotating shaft mechanism 100 is in the unfolded state, the orthographic projection, on the set plane, of the connection portion 31 that is of the rotating member 30 and that is configured to be connected to the first swing arm 20 at least partially overlaps the orthographic projection of the base 10 on the set plane, so that when the width size of the rotating shaft mechanism 100 is not changed, the connection portion 31 is extended and lengthened toward the base 10, thereby facilitating increasing a length of the path or travel on which relative rotation and sliding occur between the rotating member 30 and the first swing arm 20 when the width size of the rotating shaft mechanism 100 is not increased.

Optionally, in some embodiments, as shown in FIG. 11, the connection portion 31 has a track groove 312, the first swing arm 20 has a sliding body 211, and the sliding body 211 is higher pair fit with the track groove 312. When the rotating shaft mechanism 100 is in the unfolded state, an orthographic projection of the track groove 312 on the set plane at least partially overlaps the orthographic projection of the base 10 on the set plane.

It may be understood that the sliding body 211 being higher pair fit with the track groove 312 means that the sliding body 211 is in point contact or line contact with a groove wall of the track groove 312, so that the sliding body 211 can slide along the groove wall of the track groove 312 and can rotate in the track groove 312. The sliding body 211 may have various structures in regular or irregular shapes, such as a column-like structure (FIG. 11 exemplarily shows this case), a rod-like structure, or a plate-like structure. However, this application is not limited thereto. When the rotating shaft mechanism 100 is switched between the unfolded state and the folded state, the sliding body 211 may rotate and slide in the track groove 312.

When the rotating shaft mechanism 100 is in the unfolded state, the orthographic projection of the track groove 312 on the set plane at least partially overlaps the orthographic projection of the base 10 on the set plane. Therefore, at least part of the groove wall of the track groove 312 and at least part of the base 10 are sequentially disposed along the thickness direction H of the base 10, so that the at least part of the groove wall of the track groove 312 and the at least part of the base 10 are approximately located at a same position in the width direction N of the base 10 and share same space.

Such settings are beneficial to extending and lengthening the track groove 312 toward the base 10, thereby facilitating increasing a length of a path or travel on which relative rotation and sliding occur between the rotating member 30 and the first swing arm 20 when the width size of the rotating shaft mechanism 100 is not increased, and thereby facilitating a design of the rotating shaft mechanism 100. However, in the related technology, on a support plate 0113 of the foldable mechanism 011, in a solution in which the track groove is fit with the swing arm 0112, a length of the track groove is limited by the support seat 0111, thereby affecting a design of the foldable mechanism 011. An example is shown in FIG. 10.

For example, as shown in FIG. 11, when the rotating shaft mechanism 100 is in the unfolded state, the track groove 312 is located above the base 10, that is, at least part of the track groove 312 is located above the base 10, so that the track groove 312 is fit with the sliding body 211 of the first swing arm 20. This is especially applicable to an inward-folding terminal device.

Certainly, in some other embodiments, alternatively, the first swing arm 20 may have the track groove 312, and the connection portion 31 has the sliding body 211. That is, positions of the track groove 312 and the sliding body 211 are exchanged.

The base 10 may have a structure in a plurality of forms. The following descriptions are provided as examples.

In some embodiments, as shown in FIG. 7 and FIG. 9, the base 10 includes a shaft cover 11 and a substrate 12, and the substrate 12 is disposed on an inner side of the shaft cover 11. The first swing arm 20 is rotatably connected to the substrate 12. When the rotating shaft mechanism 100 is in the unfolded state, the orthographic projection of the connection portion 31 on the set plane at least partially overlaps an orthographic projection of the shaft cover 11 on the set plane, and the substrate 12, the first swing arm 20, and the connection portion 31 are located on a same side of the shaft cover 11 in the thickness direction H of the base 10 (that is, a side that an opening of the shaft cover 11 faces).

It may be understood that the shaft cover 11 is approximately cover-shaped, for example, may include an arc-shaped wall or a bent wall formed with inner side space, to protect or cover the substrate 12 located on an inner side thereof. The substrate 12 may be various structures in regular or irregular shapes, such as a block-like structure, a plate-like structure, or a frame structure. However, this application is not limited thereto.

When the rotating shaft mechanism 100 is in the unfolded state, the orthographic projection of the connection portion 31 on the set plane at least partially overlaps an orthographic projection of the shaft cover 11 on the set plane. Therefore, when the rotating shaft mechanism 100 is in the unfolded state, at least part of the connection portion 31 and at least part of the shaft cover 11 are sequentially disposed along the thickness direction H of the base 10, so that the at least part of the connection portion 31 and the at least part of the shaft cover 11 are approximately located at a same position in the width direction N of the base 10 and share same space. For example, at least part of the connection portion 31 may be located above (that is, a side that an opening of the shaft cover 11 faces) the shaft cover 11. This case is shown in FIG. 7 and FIG. 8.

When the rotating shaft mechanism 100 is in the unfolded state, the orthographic projection of the connection portion 31 on the set plane may not overlap the orthographic projection of the substrate 12 on the set plane. Certainly, alternatively, the orthographic projection of the connection portion 31 on the set plane may at least partially overlap the orthographic projection of the substrate 12 on the set plane.

For example, as shown in FIG. 7 and FIG. 8, when the connection portion 31 has the straight sliding groove 311, and the rotating shaft mechanism 100 is in the unfolded state, the orthographic projection of the straight sliding groove 311 on the set plane at least partially overlaps the orthographic projection of the shaft cover 11 on the set plane.

For example, as shown in FIG. 11, when the connection portion 31 has the track groove 312, and the rotating shaft mechanism 100 is in the unfolded state, the orthographic projection of the track groove 312 on the set plane at least partially overlaps the orthographic projection of the shaft cover 11 on the set plane.

Optionally, in some embodiments, as shown in FIG. 7 and FIG. 8, a notch 101 is formed between a side portion of the substrate 12 (that is, a side of the substrate 12 in the width direction N of the base 10) and a side edge of the shaft cover 11 (that is, an edge of a side of the shaft cover 11 in the width direction N of the base 10). When the rotating shaft mechanism 100 is in the unfolded state, at least part of the connection portion 31 is located in the notch 101.

Based on such settings, formation of the notch 101 may provide accommodation space for at least part of the connection portion 31, so that the orthographic projection of the connection portion 31 on the set plane at least partially overlaps the orthographic projection of the shaft cover 11 on the set plane when the rotating shaft mechanism 100 is in the unfolded state.

In the foregoing embodiment, a case in which the base 10 is an assembly including a plurality of components is described. However, the structure of the base 10 is not limited thereto. In some other embodiments, the base 10 may be a single component, that is, may be considered as an integrated structure that is integrally formed. For example, the base 10 may include the substrate 12 instead of the shaft cover 11, or the base 10 may include the shaft cover 11 instead of the substrate 12.

In some embodiments, as shown in FIG. 7 to FIG. 9 and FIG. 11, the rotating member 30 is a door plate. The door plate has an adhering surface 301. The adhering surface 301 is used for adhering to the foldable screen 2000.

It may be understood that the door plate is a structural member that is configured to support the foldable portion 2100 of the foldable screen 2000, and that can shape the foldable portion 2100 in the folded state, and may have a structure in various shapes, for example, may be a plate-shaped structure or a sheet-shaped structure, thereby facilitating forming an adhering surface 301 with a specific area, to better support the foldable portion 2100. Certainly, the door plate may alternatively be a structure in another shape.

When the terminal device 10000 is in the unfolded state, the door plate may be approximately flat, to support the foldable portion 2100 of the flat foldable screen 2000. When the terminal device 10000 is in the folded state, accommodation space for accommodating the foldable portion 2100 may be formed between door plates located on the two sides of the base 10.

Optionally, in some embodiments, as shown in FIG. 7 and FIG. 9, the rotating shaft mechanism 100 further includes at least two second swing arms 40 and at least two connection members 50. The second swing arms 40 are respectively disposed on the two sides of the base 10, and the second swing arms 40 are rotatably connected to the base 10. The connection members 50 are respectively disposed on the two sides of the base 10, and the connection member 50 is rotatably connected to the base 10 by using the second swing arm 40 located on a same side of the base 10. The rotating member 30 is rotatably connected to the connection member 50 located on a same side of the base 10.

It may be understood that the second swing arm 40 being respectively disposed on the two sides of the base 10 means that the second swing arms 40 are disposed on the two sides of the base 10, but a quantity of second swing arms 40 on each side may be one or more. Quantities of second swing arms 40 on the two sides of the base 10 may be the same or different.

The second swing arm 40 may have swing arm structures of various shapes, and may be set based on an actual requirement. This is not limited in embodiments of this application. A main function of the second swing arms 40 on the two sides of the base 10 is to rotate relative to the base 10. For convenience of description, swing arms are all referred to as second swing arms. However, shapes and structures of the second swing arms 40 on the two sides of the base 10 may be the same or different.

It may be understood that the connection members 50 being respectively disposed on the two sides of the base 10 means that the connection members 50 are disposed on the two sides of the base 10, but a quantity of connection members 50 on each side may be one or more. Quantities of connection members 50 on the two sides of the base 10 may be the same or different. Optionally, the connection members 50 on the two sides of the base 10 may be disposed opposite to each other, that is, are approximately at a same position in the length direction of the base 10. Certainly, in some other embodiments, the connection members 50 on the two sides of the base 10 may not be disposed opposite to each other, that is, are staggered in the length direction of the base 10.

The connection member 50 on one side of the base 10 is configured to be fixedly connected to the first housing 200, and the connection member 50 on the other side of the base 10 is configured to be fixedly connected to the second housing 300. When the first housing 200 and the second housing 300 relatively rotate, the connection members 50 located on the two sides of the base 10 are respectively driven to rotate. Optionally, the connection member 50 on one side of the base 10 and the first housing 200 may be separately formed to be connected, for example, may be connected by using a fastener (such as a bolt, a screw, a pin, or a rivet). Certainly, in some other embodiments, the connection member 50 on one side of the base 10 and the first housing 200 may alternatively be of an integrated structure integrally formed. Similarly, the connection member 50 on the other side of the base 10 and the second housing 300 may be separately formed to be connected, or may be of an integrated structure integrally formed. The connection member 50 may be various structural members in regular or irregular shapes, such as a block-like structure, a plate-like structure, or a frame structure. However, this application is not limited thereto.

It may be understood that, the rotating member 30 and the connection member 50 may be connected in various rotation manners, for example, may be rotatably connected by using a rotating shaft, or may be fit by using a virtual shaft (for example, a circular-arc-shaped groove is provided on one of the rotating member 30 and the connection member 50, and a circular-arc-shaped sliding track configured to be slidably fit with the circular-arc-shaped groove is provided on the other one). However, this application is not limited thereto. The connection member 50 may be rotatably or slidably connected to the second swing arm 40.

As shown in FIG. 7 and FIG. 9 in sequence, when the rotating shaft mechanism 100 is switched from the unfolded state to the folded state, the connection members 50 located on the two sides of the base 10 relatively rotate close to each other. The connection member 50 drives the second swing arm 40 and the rotating member 30 to rotate relative to the base 10, and the second swing arms 40 located on the two sides of the base 10 also relatively rotate close to each other. In the process, the rotating member 30 and the connection member 50 rotate relatively, so that when the rotating shaft mechanism 100 is in the folded state, adhering surfaces 301 of the rotating members 30 located on the two sides of the base 10 are inclinedly disposed to form accommodation space for accommodating the foldable portion 2100 between the two.

As shown in FIG. 9 and FIG. 7 in sequence, when the rotating shaft mechanism 100 is switched from the folded state to the unfolded state, the connection members 50 located on the two sides of the base 10 relatively rotate away from each other. The connection member 50 drives the second swing arm 40 and the rotating member 30 to rotate relative to the base 10, and the second swing arms 40 located on the two sides of the base 10 also relatively rotate away from each other. In the process, the rotating member 30 and the connection member 50 rotate relatively, so that when the rotating shaft mechanism 100 is in the folded state, adhering surfaces of the rotating members 30 located on the two sides of the base 10 are approximately flush or coplanar to support the foldable portion 2100.

For example, as shown in FIG. 7 and FIG. 9, when the rotating member 30 is a door plate, and the connection portion 31 is slidably connected to the first swing arm 20, the first swing arm 20 may be a door plate swing arm, and the second swing arm 40 may be a primary swing arm or a secondary swing arm. The secondary swing arms, also referred to as synchronous swing arms, mean swing arms that synchronously rotate, that is, the secondary swing arms located on the two sides of the base 10 synchronously rotate (synchronous rotation may be implemented in various synchronous connection manners).

For example, when the rotating member 30 is a door plate, and the connection portion 31 is rotatably and slidably connected to the first swing arm 20, one of the first swing arm 20 and the second swing arm 40 may be a primary swing arm, and the other is a secondary swing arm.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A rotating shaft mechanism, comprising:
a base;
at least two first swing arms, respectively disposed on two sides of the base, and the first swing arms being rotatably connected to the base; and
at least two rotating members, respectively disposed on the two sides of the base, the rotating member having a connection portion, and the connection portion being connected to the first swing arm located on a same side of the base, wherein
the first swing arms located on the two sides of the base are capable of relatively rotating based on the base, so that the rotating shaft mechanism is switched between an unfolded state and a folded state; and when the rotating shaft mechanism is in the unfolded state, an orthographic projection of the connection portion on a set plane at least partially overlaps an orthographic projection of the base on the set plane, and the set plane is perpendicular to a thickness direction of the base.

2. The rotating shaft mechanism according to claim 1, wherein the connection portion is slidably connected to the first swing arm; and when the rotating shaft mechanism is switched from the unfolded state to the folded state, the connection portion and the first swing arm slide relatively.

3. The rotating shaft mechanism according to claim 2, wherein the connection portion has a straight sliding groove, and the first swing arm is slidably disposed in the straight sliding groove; and
when the rotating shaft mechanism is in the unfolded state, an orthographic projection of the straight sliding groove on the set plane at least partially overlaps the orthographic projection of the base on the set plane.

4. The rotating shaft mechanism according to claim 3, wherein when the rotating shaft mechanism is in the unfolded state, the straight sliding groove is located above the base.

5. The rotating shaft mechanism according to claim 3, wherein when the rotating shaft mechanism is in the unfolded state, both an orthographic projection of a first groove wall and an orthographic projection of a second groove wall of the straight sliding groove on the set plane at least partially overlap the orthographic projection of the base on the set plane; and the first groove wall and the second groove wall are relatively disposed along the thickness direction of the base.

6. The rotating shaft mechanism according to claim 3, wherein when the rotating shaft mechanism is in the unfolded state, a sliding extension direction of the straight sliding groove is inclined to the thickness direction of the base.

7. The rotating shaft mechanism according to claim 3, wherein the first swing arm comprises:
a rotating portion, rotatably connected to the base; and
a sliding portion, a first end of the sliding portion being connected to the rotating portion, and the sliding portion being slidably disposed in the straight sliding groove, wherein
when the rotating shaft mechanism is in the unfolded state, the first end is located above the rotating portion.

8. The rotating shaft mechanism according to claim 1, wherein the connection portion is rotatably and slidably connected to the first swing arm; and when the rotating shaft mechanism is switched from the unfolded state to the folded state, the connection portion and the first swing arm relatively rotate and slide.

9. The rotating shaft mechanism according to claim 8, wherein the connection portion has a track groove, the first swing arm has a sliding body, and the sliding body is higher pair fit with the track groove; and
when the rotating shaft mechanism is in the unfolded state, an orthographic projection of the track groove on the set plane at least partially overlap the orthographic projection of the base on the set plane.

10. The rotating shaft mechanism according to claim 9, wherein when the rotating shaft mechanism is in the unfolded state, the track groove is located above the base.

11. The rotating shaft mechanism according to any one of claims 1 to 10, wherein the base comprises:
a shaft cover; and
a substrate, disposed on an inner side of the shaft cover, wherein
the first swing arm is rotatably connected to the substrate; and when the rotating shaft mechanism is in the unfolded state, the orthographic projection of the connection portion on the set plane at least partially overlaps an orthographic projection of the shaft cover on the set plane, and the substrate, the first swing arm, and the connection portion are located on a same side of the shaft cover in the thickness direction of the base.

12. The rotating shaft mechanism according to claim 11, wherein a notch is formed between a side portion of the substrate and a side edge of the shaft cover; and when the rotating shaft mechanism is in the unfolded state, at least part of the connection portion is located in the notch.

13. The rotating shaft mechanism according to any one of claims 1 to 10 and 12, the rotating member is a door plate, the door plate has an adhering surface, and the adhering surface is used for adhering to a foldable screen.

14. The rotating shaft mechanism according to claim 13, wherein the rotating shaft mechanism further comprises:
at least two second swing arms, respectively disposed on the two sides of the base, and the second swing arms being rotatably connected to the base; and
at least two connection members, respectively disposed on the two sides of the base, and the connection member being rotatably connected to the base by using the second swing arm located on a same side of the base, wherein
the rotating member is rotatably connected to the connection member located on a same side of the base.

15. A foldable apparatus, wherein the foldable apparatus comprises:
a first housing;
a second housing; and
the rotating shaft mechanism according to any one of claims 1 to 14, the first swing arm or the rotating member on one side of the base being connected to the first housing, and the first swing arm or the rotating member on the other side of the base being connected to the second housing.

16. A terminal device, wherein the terminal device comprises:
the foldable apparatus according to claim 15; and
a foldable screen, disposed on the first housing and the second housing, wherein a position of a foldable portion of the foldable screen corresponds to a position of the rotating shaft mechanism.
